# EUROPEAN PATENT APPLICATION

(11) **EP 4 266 220 A1**
(43) Date of publication of application: **25.10.2023**
(21) Application number: 22462006.2
(22) Date of filing: 21.04.2022
(51) Int. Cl.: G06N 20/00

(54) **METHOD FOR EFFICIENT MACHINE LEARNING**

(71) Applicant: E-GROUP ICT SOFTWARE Informatikai Zrt., 1027 Budapest (HU)
(72) Inventor: Hollós, Roland, H-7632 Pécs (HU); Yan, Yuping, H-1082 Budapest (HU); Tényi, Ákos, H-1082 Budapest (HU)
(74) Representative: Danubia Patent & Law Office LLC

(57) **Abstract**

A computer-implemented method for efficient machine learning is disclosed. The method is carried out by a server computing device (46) and a plurality of client computing devices (42) connected to said server computing device (46), wherein each of the client computing devices (42) locally stores a local dataset (44). The method comprises the steps of:
a) generating, by the server computing device, an initial global machine-learning model,
b) defining, by a server computing device, a number for division of the local datasets of the client computing devices into a plurality of segments,
c) defining, by the server computing device, a universal sequence of the segments of the local datasets for all client computing devices,
d) communicating, by the server computing device, said number of segment and said universal sequence of the segments to the client computing devices,
e) dividing the local dataset, by each client computing device, into said number of segments,
f) defining, by the server computing device, a sequence of the client computing devices for training said global model,
g) forwarding, by the server computing device, the model to a client computing device selected according to said sequence of the client computing devices,
h) locally training the model, by the selected client computing device, using a local learning model with the local dataset segment selected according to said universal sequence of the local dataset segments,
i) returning the locally trained model, by the selected client computing device, to the server computing device,
j) repeating steps g)-i) until all client computing devices have been selected,
k) repeating steps f)-j) until all data segments of the local datasets have been used.

## Description

The present invention relates to a method for efficient machine learning.

Federated learning (also called collaborative learning) is a machine learning technique for the collaborative training of machine learning models by multiple participants without the sharing of raw data. However, current researches demonstrate that traditional federated learning schemes based on gradient model update cannot provide sufficient privacy guarantees. There are some existing cryptographic primitive solutions, such as homomorphic encryption, differential privacy, secure aggregations, to improve to the security of federated learning. However, these current approaches either lead to lower accuracy by adding noise or increase the computation cost through encryption schemes.

Currently, machine learning methods can be categorized into three main groups: local learning, central learning with a trusted third party and distributed learning. Federated learning (FL) is a special case of distributed learning (DL). Distributed learning is about having centralized data but distributing the model training to different nodes, while federated learning is about having decentralized data and decentralized training, and in effect having one central model.

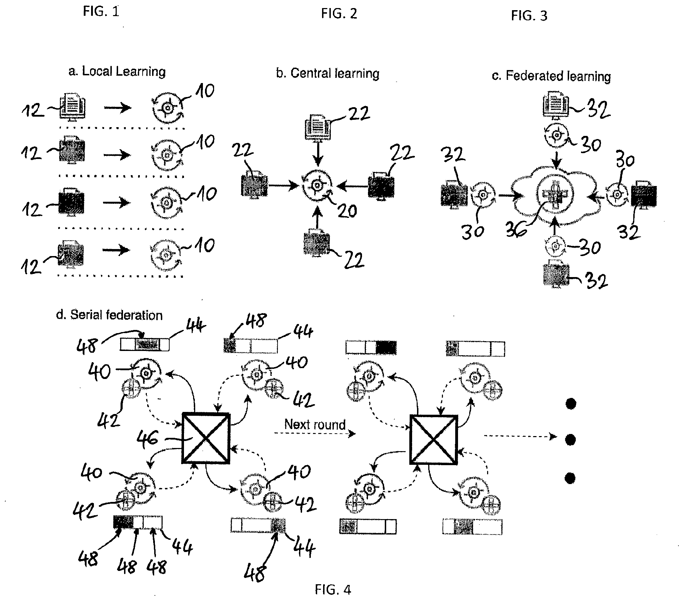

The concept of the local learning is shown in Figure 1. In this learning scheme, there are a plurality of local machine learning models 10 that are separately trained by local computing devices 12 using a sample from a local dataset. The local datasets are typically separated in different geographical areas. This learning scheme, however, does not generalize, the local models reflect features and biases of local data, and when used at other geographical areas, they most often provide biased or inaccurate predictions. The performance, the model accuracy and the complexity of this learning scheme heavily rely on the properties of individual local computing devices 12.

The concept of the central learning is shown in Figure 2. In contrast to the local learning, the central learning performs centralization of data and parameters originating from different sources to solve the problem of insufficient amount of local data for local learning. In this learning scheme, there is single (global) machine learning model 20 that is subsequently trained by using aggregated samples from the local datasets. The samples are sent by the local computing devices 22 through communication channels to a server (not shown) responsible for training the model. Access to the global model 20 by the local computing devices 22 is managed by the server also acting as an arbitrating device. The arbitrating device itself, however, does not make any change in the global model 20. Typical applications of the central learning are, for example, extensions of application forms deployed globally, like Google's advertisement recommendation system or Netflix's video recommendation system. However, along with the increase in the data traffic required for moving data in the centralized scheme, this kind of learning may raise concerns about data ownership, confidentiality, privacy and security among data owners, as well as the possibility of creating data monopolies in favour of data aggregators.

For improving security and solving data confidentiality problems in the centralized learning scheme, federated learning schemes have been proposed. The concept of federated learning is shown in Figure 3. In a federated learning scheme, there is a plurality of local machine learning models 30 that are independently trained by several local computing devices 32 using samples from the local datasets. The local models 30 are periodically forwarded to a central server computing device 34 that maintains a global machine learning model 36. The server computing device 36 manages access to the global model 30 by the local computing devices 32 and securely aggregates the local models 30 into the global model 36 once any one or more of the local models 30 has been updated. However, this approach cannot guarantee data privacy either. A malicious participant can infer sensitive information about the original local datasets from the aggregated global model 36 and even certain hyper-parameters of the global model 36. Reconstruction attacks, inference attacks and model corruption attacks can be conducted successfully on the federated learning schemes. To provide protection against these attacks, some cryptographic primitives have been proposed, like specific encryption methods, such as secure multi-party computation, homomorphic encryption and data scrambling methods, such as differential privacy. However, there are trade-offs among accuracy, privacy and complexity.

In the centralized federated learning protocols, the server orchestrates communication but learning is not incremental between peer models, while the private algorithms based on incremental learning are decentralized (Sheller et al. "Multi-institutional deep learning modeling without sharing patient data: A feasibility study on brain tumor segmentation." International MICCAI Brainlesion Workshop, pp. 92-104. Springer, Cham, 2018). Although a decentralized system provides some advantages over a centralized framework, they are usually harder to implement and more prone to implementation errors. Furthermore, in the Cyclic Institutional Incremental Learning (CIIL) scheme (Chang et al., "Distributed deep learning networks among institutions for medical imaging", Journal of the American Medical Informatics Association, Volume 25, Issue 8, August 2018, pp. 945-954) there is no mechanism described to provide robustness (e.g., error connected to a client).

In most of the federated learning schemes of the prior art, synchronous training is a major logistical challenge, especially when the client computing devices work with different network connection speeds or different hardware configurations. Communication between the central server computing device and the client computing devices takes place by a message queue, which stores the sent messages. This asynchronous communication improves robustness, as in case of incomplete message processing, another instance of the server computing device can retrieve the message again and re-process it. Due to the message queue, the system is highly scalable, i.e. there is no theoretical limitation on the number of client computing devices taking part in model training.

In the CIIL scheme, the order of the client computing devices in the update queue is fixed. If the datasets of the client computing devices are not identically distributed and independent (no-IID), catastrophic forgetting (after updating the model on new dataset, the updated model will be less accurate on the previously learned data, i.e. "it forgets what it learned previously") can be even higher because the datasets of the client computing devices in the all-data distribution can have subsets where two datasets are not too distant from each other.

Continuous model updating is an inherent characteristic of incremental learning, thus catastrophic learning is a major challenge in this field. Recently many solutions have been provided to address the problem. One of them is the so called EWC (Kirkpatrick et al, "Overcoming catastrophic forgetting in neural networks", Proceedings of the National Academy of Sciences 114, No. 13 (2017): 3521-3526.), which penalizes the loss function based on the distribution of the individual weights in the previous model. The method according to the present invention is designed to use this tool from the beginning.

Anonymization by removing personally identifiable information about the user (also known as sensitive characteristics) before the data is released, is a common way of protecting user privacy. However, in federated learning, there is a characteristic inference attack. At this attack, an attacker can de-anonymize data or locks out the owner of the record for malicious purposes.

In this case, the protection of user information is quite important. Different anonymization techniques can be applied to prevent this attack, such as the ring (group) signature strategy. Because the client devices are not communicating with each other, the server can easily make a sybil attack (building up a virtual network with virtual clients) against the client. To protect the client devices, the framework must ensure that the updated model is from another client device and not from the server. To ensure this, each client may be signed and ring signatures may be used. The ring signature, as a kind of digital signature scheme, does not require cooperation among the client devices, but it enables unconditional anonymity of the signer, without a third party or centralized server.

It is therefore an object of the present invention to eliminate, at least partly, the drawbacks of the currently used collaborative learning schemes and to provide a method for improved federated machine learning that preserves privacy, while providing high accuracy and low communication cost.

It is another object of the invention to provide a collaborative learning scheme that provides high robustness and a simple implementation structure, and that is capable of protecting against inference attacks, reconstruction attacks and other threats.

Furthermore, it is also an object of the present invention to provide a collaborative learning scheme that can federate any online learning problems without the need of extra hyper-parameters.

The above objects are achieved by providing a computer-implemented method for efficient machine learning, the method being carried out by a server computing device and a plurality of client computing devices connected to said server computing device, wherein each of the client computing devices locally stores a local dataset, the method comprising:
a) generating, by the server computing device, an initial global machine-learning model,
b) defining, by a server computing device, a number for division of the local datasets of the client computing devices into a plurality of segments,
c) defining, by the server computing device, a universal sequence of the segments of the local datasets for all client computing devices,
d) communicating, by the server computing device, said number of segment and said universal sequence of the segments to the client computing devices,
e) dividing the local dataset, by each client computing device, into said number of segments,
f) defining, by the server computing device, a sequence of the client computing devices for training said global model,
g) forwarding, by the server computing device, the model to a client computing device selected according to said sequence of the client computing devices,
h) locally training the model, by the selected client computing device, using a local learning model with the local dataset segment selected according to said universal sequence of the local dataset segments,
i) returning the locally trained model, by the selected client computing device, to the server computing device,
j) repeating steps g)-i) until all client computing devices have been selected,
k) repeating steps f)-j) until all data segments of the local datasets have been used.

Various preferred embodiments of the method are defined by the dependent claims.

The invention will now be described in more details with reference to the accompanying drawings. In the drawings:
Figure 1 is a schematic view illustrating the concept of local learning according to the prior art.
Figure 2 is a schematic view illustrating the concept of centralized learning according to the prior art.
Figure 3 is a schematic view illustrating the concept of federated learning according to the prior art.
Figure 4 is a schematic view illustrating the concept of the improved federated learning according to the present invention.
Figure 5 is a flow diagram illustrating the main steps of the method for improved federated learning according to the present invention.

The concept of the improved federated learning according to the present invention is schematically illustrated in Figure 4. For the sake of clarity, the improved federated learning of the present invention will be referred to as "serial federation" hereinafter.

In the serial federation learning method according to the invention, there is a single global machine-learning model 40 that is subsequently trained by a plurality of local client computing devices 42 using samples from datasets 44 locally stored in the client computing devices 42 or in separate databases (not shown) locally or remotely accessible by the client computing devices 42.

The global learning model 40 is forwarded by a central server computing device 46 to the client computing devices 42 in a cyclic manner according to a predefined sequence. The server computing device 46 functions only as an arbitrating entity that is responsible for receiving the locally updated global model 40 from a client computing device 42 and forwarding the model 40 to the next client computing device 42 based on the actual arbitration rules. There is no aggregation phase in this serial federation, as each training result is the intermediate state of the final global model 40.

In the initialization phase, the local datasets 44 are divided into multiple segments 48, the number of which is initially defined by the server computing device 46. The global learning model 40 is dynamically trained by the client computing devices 42 using the local data segments 48 in an order specified by the arbitrating server computing device 46. In this case, local data cannot be inferred and traced since no local parameters are transferred from the client computing devices 42. Furthermore, cryptographic primitives may be adopted to provide user anonymity. In this case, the client computing devices do not communicate with each other and do not know the existence of other client computing devices and the running sequence.

Normally, the server computing device 46 is honest-but-curious. In this case, the semi-honest server will follow the instructions of protocol, but attempts to infer private information using received data. Most of the research in federated learning have adopted the semi-honest scheme, for the reason that it is in interest for all parties to follow the protocol honestly.

Secondly, in cryptography, it is a standard approach to first build a security protocol against a semi-honest adversary, which can then be strengthened by zero-knowledge proofs to defend against malicious adversaries.

The communication channels between the server computing device 46 and the client computing device 42 are secure. For each client-server connection a secure, internal VPN is established, which also serves to verify the identity of the clients. Meanwhile, the whole communication process is through secure HTTPS protocol.

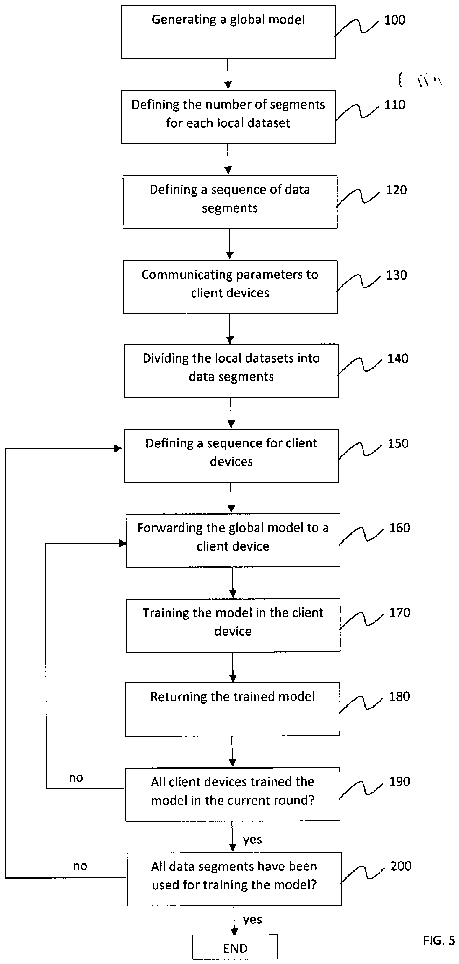

The method of serial federation according to present invention will be described below in detail with reference to Fig. 5 illustrating the main steps of the method in a flow diagram.

In the first step 100, an initial untrained machine-learning model is generated by the server computing device. This model will serve as a global model for locally training by all client computing devices.

In the next step 110, the server computing device defines a number for division of the local datasets of the client computing devices into a plurality of data segments.

Preferably, the server computing device defines a minimum size *sₘᵢₙ* for the data segments so as to make each training more balanced in the data size. The server computing device also defines a number of data segments, k, for all of the client computing devices. Due to the fixed number k for all client computing devices, the client computing devices execute the same k number of training rounds. The definition of a minimum size for the data segments implies that all the datasets should have a size that is equal to or larger than the minimum size multiplied by the number *k* of data segments. The use of a minimum size of the data segments supports the efficiency and accuracy of model training.

In step 120 the server computing device defines a universal sequence of the segments of the local datasets for all client computing devices.

It is preferred that the server computing device defines a random sequence of the data segments, which guarantees that the client computing devices will never have information on the previous client computing device within the sequence of training.

In step 130 the number *k* of data segments specified for all local datasets of the client computing devices and the universal sequence of the data segments are communicated by the server computing device to the client computing device through secure communication channels.

Preferably, the minimum segment size *sₘᵢₙ* and the number *k* are sent by broadcasting from the server computing device to all client computing devices at the initialization of the training process.

Based on the number k of data segments defined by the server computing device, the client computing devices divide their local datasets into the particular number *k* of data segments in step 140.

Before starting the local model training process, the server computing device defines, in step 150, a sequence of the client computing devices for training the global model. Preferably, a different sequence of the client computing devices is defined for each round of training where the local dataset segments have the same position within the universal sequence of the data segments.

It is particularly preferred that the server computing device defines a random sequence of the client computing devices for each round of training. The random training sequence disables to infer back data from gradients for each client computing device. Without a randomized training sequence of the client computing devices some cryptographic primitives such as differential privacy should be used.

In step 160, the server computing device forwards the global machine-learning model to one of the client computing devices selected according to the predetermined sequence of the client computing devices. In the first round of training, the first selected client computing device always receives an untrained, initial model.

In step 170, the selected client computing device locally trains the global machine-learned model with the local dataset segment selected according to the universal sequence of the local dataset segments. For training the model, the client computing device uses a local learning model. The type of the local learning model used strictly depends on the application considered. For example, in a model with a correct model-updating scheme, the model may be a convolutional neural network (CNN), a feedforward neural network (FNN), a Long Short Term Memory networks (LSTM), K-means, or a Naive Bayes classifier. In general, any online learning algorithm may be used for training the model.

Once a training process of the model has been completed in a client computing device, the client computing device may verify the training accuracy. If the accuracy does not achieve a threshold value, a further round of training may be executed on the model by the same client computing device.

We also fix a time setting for each client training. It depends on the size of each data segments. If we train on small dataset, we can set a shorter waiting time such as 1 min. Covertly, we can set a longer wating time, such as 5 min. In this case, even one of the clients or some of the clients drop the system, it will not lead to a failed training.

In order to use the data segments in the proper order according to the sequence defined by the server computing device, the client computing devices use a special "ready" index for each data segment of its local dataset. Once a data segment has been used for the local training of the global model, the "ready" index of that data segment is set to indicate the respective state of the data segment.

The specific steps of the training algorithm performed by the server computing device are shown in Algorithm 1.

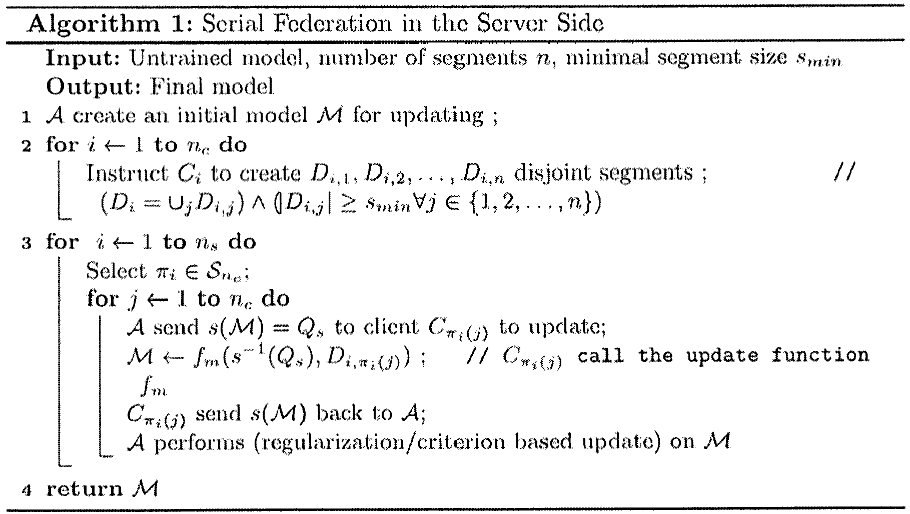

The specific steps of the training algorithm performed by the client computing devices are shown in Algorithm 2.

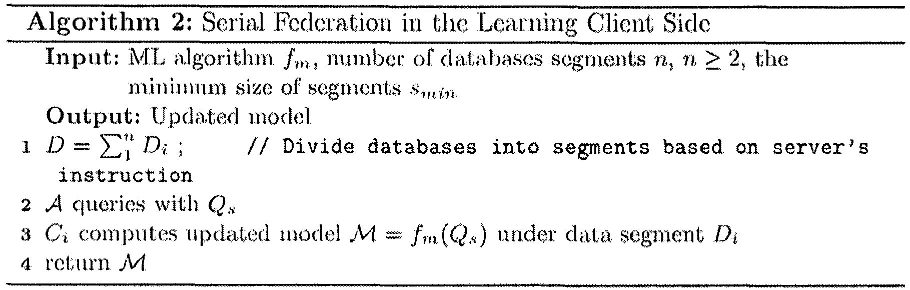

After the local training, the locally trained global model is returned, in step 180, from the client computing device to the server computing device through a secure communication channel.

After all rounds of training have been completed, a final, trained model is produced and a state is assigned to the model. In a preferred embodiment of the method of the invention, the server computing device may change the state information of the global model. For example, the server can act as a regularizer in the learning procedure, and can skip suspicious model updates. In this embodiment, the server computing device is responsible not only for routing the updated model from one client computing device to another one, but also for regulating the learning process.

In step 190 it is checked, by the server computing device, whether all client computing devices have been selected for the actual serial number of the dataset segments, and if it is determined that not all of the client computing devices have completed the training of the global model with the particular segment of its dataset, the method returns to step 160 with the selection of the next client computing device according to the sequence defined by the server computing device. Otherwise, the method proceeds to the next step 200 in which it is checked, by the server computing device, whether all data segments of the local datasets have been used by the client computing devices for training the global model. If it is determined that not all data segments of the local datasets have been used, the method returns to step 150, in which the server computing device defines a new sequence of the client computing devices for training the global machine-learning model for the next segment of the local datasets. Otherwise, the method terminates.

The method of serial federation according to the present invention has following advantages with respect to the prior art machine learning processes:
- There is no accuracy dropout because the highest accuracy of model training can be ensured.
- There is no central aggregation of the locally trained model.
- It can adopt to any kind of machine learning methods, like CNN, FNN, LSTM, SVM.
- It is also suitable for implementing non-machine learning methods. Private federated hypothesis testing or calculate statistics may be carried out easily.
- It solves the problem of continuous update the machine-learning model when new data is provided, with the nature of data segments in the serial federation structure, only another round of model training is necessary with the new data add in.
- It is easy to add new datasets, new data segments and new rounds of training to the current scheme.
- It is suitable for implementing federated private SQL for big databases, therefore it is a perfect solution when only few client computing devices are included but those have large databases.
- It may decrease the effect of catastrophic forgetting problem in the machine learning.

Experimental results show that serial federation has better performance on non-IID dataset comparing to the FedAvg algorithm. It is more robust comparing to normal federation schemes. Experiments further show that serial federation can reach higher accuracy with less training rounds but larger epochs, which leads to a small network usage. With larger epochs, the local GPU may be used for doing the training, rather than using network communication. In this case, the training relies to higher extent on the local devices rather than the currently available bandwidth and network conditions.

In the method of serial federation according to the invention, the central server computing device enhances robustness. Since the server computing device is a single point of failure (SPF) in the federated system, it is necessary to run multiple instances of the server computing device running in parallel. This also ensures high availability, lowering the possibility of downtime, thus in case of the failure of one instance of the server computing device, other instances thereof can still process requests. A further benefit of having multiple instances of the server computing device is that more requests can be processed at the same time for providing proper response time.

The database permutation and the segmentation of the datasets provide a new concept of training when there is new data added. It solves the problem of continuous private update on the federated learning model in the presence of new data. With the data segmentation in the serial federation structure, when new data is added, only another round of model training is necessary which reduces the complexity of the method.

## Claims

1. A computer-implemented method for efficient machine learning, the method being carried out by a server computing device (46) and a plurality of client computing devices (42) connected to said server computing device (46), wherein each of the client computing devices (42) locally stores a local dataset (44), the method comprising:
a) generating (100), by the server computing device, an initial global machine-learning model,
b) defining (110), by a server computing device, a number for division of the local datasets of the client computing devices into a plurality of segments,
c) defining (120), by the server computing device, a universal sequence of the segments of the local datasets for all client computing devices,
d) communicating (130), by the server computing device, said number of segment and said universal sequence of the segments to the client computing devices,
e) dividing (140) the local dataset, by each client computing device, into said number of segments,
f) defining (150), by the server computing device, a sequence of the client computing devices for training said global model,
g) forwarding (160), by the server computing device, the model to a client computing device selected according to said sequence of the client computing devices,
h) locally training (170) the model, by the selected client computing device, using a local learning model with the local dataset segment selected according to said universal sequence of the local dataset segments,
i) returning (180) the locally trained model, by the selected client computing device, to the server computing device,
j) repeating (190) steps g)-i) until all client computing devices have been selected,
k) repeating (200) steps f)-j) until all data segments of the local datasets have been used.

2. The method of claim 1, wherein in step f)
defining, by the server computing device, a different sequence of the client computing devices for each round of training with the local dataset segments having the same position within said universal sequence.

3. The method of claim 2, wherein in step f)
defining, by the server computing device, a random sequence of the client computing devices for each round of training with the local dataset segments having the same position within said universal sequence.

4. The method of claim 1, wherein in step b)
defining, by the server computing device, a random sequence as the universal sequence of the segments of the local data sets.

5. The method of claim 1, wherein in step h)
the local learning model is selected from the group of convolutional neural network (CNN), feedforward neural network (FNN), Long Short Term Memory networks (LSTM), K-means clustering model and Naive Bayes classifier.
